# EUROPÄISCHE PATENTSCHRIFT

(11) **EP 3 956 247 B1**
(45) Veröffentlichungstag und Bekanntmachung des Hinweises auf die Patenterteilung: **21.05.2025**
(21) Anmeldenummer: 21715774.2
(22) Anmeldetag: 04.03.2021
(51) Int. Cl.: B65G 17/34, B65G 43/02, B65G 43/06, B65G 23/16

(54) **ANTRIEBSVORRICHTUNG FÜR EINEN FÖRDERWAGEN EINES VERTEILFÖRDERERS**
DRIVE DEVICE FOR A CONVEYING CARRIAGE OF A DISTRIBUTING CONVEYOR
DISPOSITIF D'ENTRAÎNEMENT POUR UN CHARIOT DE TRANSPORT D'UN CONVOYEUR DE DISTRIBUTION

(30) Priorität: 06.03.2020 DE 102020202924
(43) Veröffentlichungstag der Anmeldung: 23.02.2022
(73) Patentinhaber: Gebhardt Fördertechnik GmbH, 74889 Sinsheim (DE); Körber Supply Chain GmbH, 61231 Bad Nauheim (DE)
(72) Erfinder: GEBHARDT, Marco, 74889 Sinsheim (DE); DEMIR, Halit, 74889 Sinsheim (DE)
(74) Vertreter: Ullrich & Naumann PartG mbB
(86) Internationale Anmeldenummer: PCT/DE2021/200030
(87) Internationale Veröffentlichungsnummer: WO 2021/175388

(56) Entgegenhaltungen:
- EP-A1- 2 908 097
- WO-A1-2019/002048
- WO-A2-2008/024685
- CN-A- 110 525 751
- DE-A1- 102009 048 352
- DE-U1- 202009 013 852
- US-A- 5 624 162

## Beschreibung

Die Erfindung betrifft eine Antriebsvorrichtung für einen Förderwagen eines Verteilförderers, vorzugsweise eines Quergurtsorters, umfassend eine Antriebsquelle, sowie eine Rollenkette zur Übertragung einer Antriebskraft der Antriebsquelle auf ein Antriebsmittel, an dem der Förderwagen befestigbar ist.

Des Weiteren betrifft die Erfindung eine Vorrichtung zur Förderung und Sortierung von Stückgütern, vorzugsweise Quergurtsorter, umfassend mindestens einen angetriebenen Förderwagen und eine Antriebsvorrichtung für den Förderwagen, wobei die Antriebsvorrichtung eine Antriebsquelle sowie eine Rollenkette zur Übertragung einer Antriebskraft der Antriebsquelle auf ein Antriebsmittel, an dem der Förderwagen befestigbar ist, aufweist.

Sortierförderer bzw. Verteilförderer sind Stückgut-Sortiersysteme zum "Identifizieren von in ungeordneter Reihenfolge ankommendem Stückgut aufgrund vorgegebener Unterscheidungsmerkmale und zum Verteilen auf Ziele, die nach den jeweiligen Erfordernissen festgelegt werden" (s. VDI-Richtlinie 3619). Eine Klassifikation findet dabei insbesondere nach der Leistungsfähigkeit statt. Höchste Durchsetze mit mehr als 10.000 Sortiergütern pro Stunde werden dabei bspw. von sogenannten Quergurtsortern erreicht.

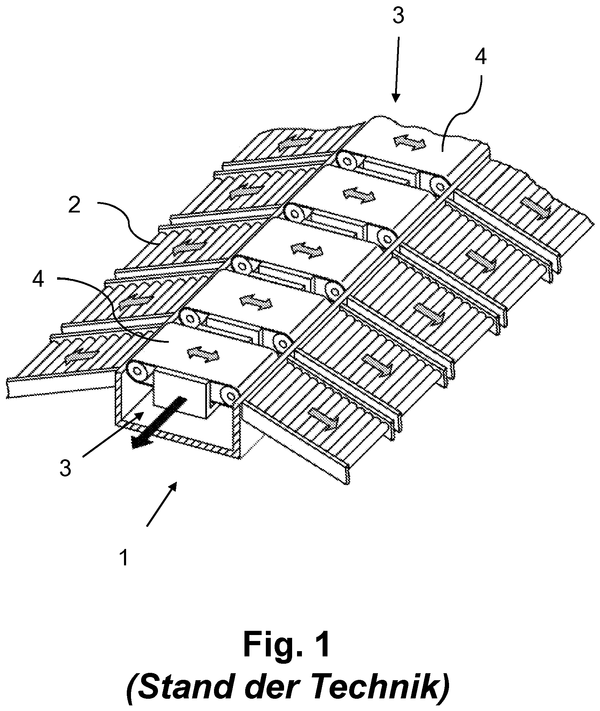

Der übliche Grundaufbau der genannten Sorter umfasst entsprechend der Darstellung in Fig. 1 eine Sortierstrecke 1, wobei längs dieser Sortierstrecke 1 aufeinanderfolgend Abwurfstationen 2 (Endstellen) und Einschleuse-Stationen (nicht gezeigt) angeordnet sind. Auf der Sortierstrecke 1 werden aufeinanderfolgend Förderwagen 3, oftmals auch als Carrier bezeichnet, geführt und angetrieben. Im Falle von Quergurtsortern weisen die Förderwagen 3 quer zu der Förderrichtung antreibbare Gurtförderer 4 zum Ein- und Ausschleusen des Sortierguts auf, wie beispielhaft in Fig. 1 gezeigt ist.

Antriebsvorrichtungen für Verteilförderer der in Rede stehenden Art sind aus der Praxis in unterschiedlicher Ausgestaltung bekannt. Üblicherweise sind herkömmliche Antriebsvorrichtungen für den Förderwagen eines Quergurtsorters als Kettenantriebssysteme ausgebildet, in der die Antriebskraft einer Antriebsquelle über eine angetriebene Rollenkette auf eine verzahnte Gummiblockkette übertragen wird. Die Rollenkette, die in der Regel als Duplexrollenkette mit verlängerten Zwischenbolzen ausgeführt ist, umspannt dabei ein Antriebskettenrad und ein Umlenk-Kettenrad, wobei das Umlenk-Kettenrad über eine Schraub-Vorrichtung verschiebbar fixiert werden kann. Auf diese Art und Weise wird die Rollenkette sowohl während der Inbetriebnahme zur Aufbringung der erforderlichen Grundspannung als auch während der Wartungszyklen zum Ausgleich der Rollenketten-Längung gespannt.

Eines der bekannten Probleme an dieser Antriebsvorrichtung ist insbesondere der erhöhte Verschleiß der teuren Rollenkette, welcher insbesondere durch ein zu hohes Spannen der Kette verursacht wird. Grund dafür ist, dass die Spannkraft der Rollenkette direkt von der Kraft der einstellenden Person abhängt. Insbesondere wenn das Wartungspersonal eines Endkunden diese Einstellung vornehmen muss, kommt es häufig zum Überspannen der Rollenkette. Ein weiterer Grund für den erhöhten Verschleiß der Rollenkette ist eine zu geringe Schmierung, was insbesondere durch ein Nichteinhalten der Wartungsvorgaben und eine falsche Öl/Fett-Dosierung verursacht wird.

Bekanntermaßen werden bei den Antriebsvorrichtungen der hier in Rede stehenden Art relativ kurze Wartungs-Intervalle (beispielsweise alle drei Monate) vorgegeben, wobei die Wartung das Nachspannen sowie auch das Nachschmieren der Rollenkette beinhaltet. Dabei ist vor einem Wartungseingriff nicht messbar und auch nicht eindeutig sichtbar, ob ein Nachspannen bzw. ein Nachschmieren tatsächlich erforderlich ist, da dies insbesondere von der Anlagenauslastung beim jeweiligen Betreiber und den damit unterschiedlich auftretenden Kräften abhängt. Dies verursacht hohe Anlagen-Stillstandszeiten sowie auch hohe Kosten für das Wartungspersonal.

Aus der WO2008/024685A2 ist beispielsweise eine Antriebsvorrichtung gemäß dem Oberbegriff des Anspruchs 1 bekannt.

Der vorliegenden Erfindung liegt daher die Aufgabe zugrunde, eine Antriebsvorrichtung für einen Förderwagen eines Verteilförderers sowie eine Vorrichtung zur Förderung und Sortierung von Stückgütern der eingangs genannten Art derart auszugestalten und weiterzubilden, dass die Lebensdauer der Rollenkette verbessert ist und gleichzeitig der Wartungsaufwand und die damit einhergehenden Kosten und Anlagen-Stillstandszeiten reduziert sind.

Erfindungsgemäß wird die voranstehende Aufgabe durch eine Antriebsvorrichtung eines Verteilförderers mit den Merkmalen des Anspruchs 1 gelöst.

Die voranstehende Aufgabe wird darüber hinaus gelöst durch eine Vorrichtung zur Förderung und Sortierung von Stückgütern mit den Merkmalen des Anspruchs 15.

Vorteilhafte Ausgestaltungen der erfindungsgemäßen Lehre sind in den abhängigen Ansprüchen angegeben.

In erfindungsgemäßer Weise ist zunächst erkannt worden, dass die Lebensdauer der Rollenkette ganz wesentlich von deren Verschleiß und der damit einhergehenden Längung der Rollenkette abhängt. Aufgrund der während des Betriebs zeitlich variierenden Antriebskräfte ist keine generelle Aussage für die Lebensdauer dieser Rollenkette möglich. Bislang kann erst durch manuelles Messen und Sichten, bspw. seitens des Betreibers der Anlage während jedes Wartungsintervalls, eine Aussage darüber gemacht werden, ob die Rollenkette ersetzt werden muss. Die vorliegende Erfindung bezieht sich dementsprechend auf die Integration einer Mess- und Steuereinrichtung in die Antriebsvorrichtung, welche mindestens einen Betriebszustand der Rollenkette überwacht und diesen ggf. beeinflusst. Gemäß Ausführungsformen der Erfindung kann die Mess- und Steuereinrichtung als ein automatisches pneumatisches Spann-, Mess- und Schmiersystem ausgebildet sein.

In vorteilhafter Weise kann es sich bei dem mindestens einen überwachten Betriebszustand der Rollenkette um die Kettenlänge bzw. Kettenlängung der Rollenkette handeln. Wie oben bereits erwähnt, ist dies einer der Hauptfaktoren, welcher die Lebensdauer der Rollenkette negativ beeinflussen kann. Zusätzlich oder alternativ könnte sich die Überwachung auf den Schmierzustand der Rollenkette beziehen.

Gemäß einer vorteilhaften Ausgestaltung kann die Mess- und Steuereinrichtung eine Steuerungskomponente aufweisen, an die Messergebnisse in Bezug auf die Kettenlänge bzw. Kettenlängung der Rollenkette übermittelt werden. Die Steuerungskomponente kann dabei derart konfiguriert sein, dass sie aus den Messergebnissen unter Anwendung vorgebbarer Algorithmen einen Verschleißzustand und/oder einen Schmierzustand der Rollenkette ableitet. Darüber hinaus kann aus den Messergebnissen auch ein Verschleißzustand der zugehörigen Kettenräder, über welche die Rollenkette läuft, eine Verformung der Achse der zugehörigen Kettenräder der Rollenkette, und/oder ein Bruch bzw. ein Reißen der Rollenkette abgeleitet werden.

Gemäß einer weiter vorteilhaften Ausgestaltung kann die Steuerungskomponente konfiguriert sein, in Abhängigkeit des abgeleiteten Schmierzustandes der Rollenkette eine angepasste Schmierdosierung und/oder ein angepasstes Schmierintervall zu ermitteln. Dementsprechend wären Fehldosierungen wirksam vermieden. Insbesondere können die Algorithmen zur Ableitung eines Schmierzustandes der Rollenkette in einer Weise ausgestaltet sein, dass durch die ermittelte angepasste Schmierdosierung bzw. das ermittelte angepasste Schmierintervall auch eine zu starke Schmierung verhindert wird. Dies ist wichtig, da es bei zu viel Öl/Fett im System passieren kann, dass Schmiermittel nicht nur auf die Rollenkette gelangt, sondern auch auf andere Komponenten geschleudert wird und diese beschädigt bzw. in ihrer Funktion beeinträchtigt.

Im Hinblick auf eine zuverlässige und exakte Überwachung der Länge der Rollenkette kann eine indirekte Messung der Kettenlängung vorgesehen sein. Hierzu wird erfindungsgemäß die Mess- und Steuereinrichtung eine Kettenspanneinrichtung aufweisen, die einen Arbeitszylinder umfasst, dessen Kolbenstange eingerichtet ist, gegen die Rollenkette zu drücken. Dabei wird der Kolben des Arbeitszylinders mit einer konstanten Arbeitskraft beaufschlagt, um somit eine konstante Kettenspannung der Rollenkette zu erzeugen. Durch die konstante Spannkraft wird die auftretende Kettenlängung kontinuierlich kompensiert.

In vorteilhafter Weise kann die Positionierung der Kolbenstange innerhalb der Zylinderhülse des Arbeitszylinders kontinuierlich gemessen werden. Aus diesen Messergebnissen kann unmittelbar die Kettenlängung der Rollenkette berechnet werden, wobei die Längung umso größer ist, je weiter der Kolben aus der Zylinderhülse austritt. Im Rahmen einer konkreten Ausgestaltung kann diesbezüglich bspw. vorgesehen sein, dass dem Arbeitszylinder ein Positionstransmitter zugeordnet ist, der konfiguriert ist, die Position des Zylinderkolbens zu bestimmen und diese an eine Steuerungskomponente der Mess- und Steuereinrichtung zu übermitteln.

Der Arbeitszylinder ist erfindungsgemäß als Pneumatikzylinder ausgeführt.

Zur Herstellung eines sicheren, verschleißarmen Kontakts zwischen der Kolbenstange des Arbeitszylinders und der Rollenkette kann in vorteilhafter Weise vorgesehen sein, dass an der Kolbenstange des Arbeitszylinders ein Spannritzel angeordnet ist, das mit der Rollenkette zusammenwirkt. Dementsprechend drückt die Kolbenstange nicht direkt auf die Rollenkette, sondern die zur Spannung der Rollenkette aufgebrachte konstante Kraft des Arbeitszylinders wird mittelbar über das fest mit der Kolbenstange verbundene Spannritzel auf die Rollenkette übertragen. Im Hinblick auf eine besonders effektive Vermeidung von Fehlschmierungen der Rollenkette - sowohl in Bezug auf die Dosierung als auch in Bezug auf das Intervall der Schmierung - kann die Antriebsvorrichtung weiterhin eine Schmiereinrichtung zur gesteuerten Abgabe von Schmiermittel an die Rollenkette umfassen. Dabei können die Schmierintervalle und die Schmiermengen bspw. von einer dezentralen Steuerungskomponente der Mess- und Steuereinrichtung auf Basis eines aus Messergebnissen in Bezug auf die Kettenlänge bzw. Kettenlängung der Rollenkette abgeleiteten Schmierzustandes der Rollenkette automatisch bestimmt werden.

In konstruktiver Hinsicht kann die Schmiereinrichtung in vorteilhafter Weise mit dem Spannritzel zusammenwirken bzw. mit diesem gekoppelt sein. Gemäß einer bevorzugten Ausgestaltung umfasst die Schmiereinrichtung dementsprechend bspw. ein auf dem Spannritzel montiertes Kettenschmierritzel mit integrierten Schmiermittel-Kanälen. Die Zähne des Kettenschmierritzels können dabei aus einem zur Speicherung und Abgabe von Schmiermitteln geeigneten Schaumstoffmaterial, bspw. PU-Schaum, gebildet sein oder es könnten spezielle Elemente aus einem derartigen Schaumstoffmaterial an den Kettenzähnen angeordnet sein.

Im Hinblick auf eine besonders zielgerichtete und dosierte Abgabe von Schmiermittel an die Rollenkette sind das Spannritzel und das Kettenschmierritzel in vorteilhafter Weise derart zueinander positioniert, dass die Zähne des Kettenschmierritzels jeweils zwischen zwei Zähnen des Spannritzels positioniert sind. Durch eine derartige Ausgestaltung bilden die Täler zwischen den Zähnen des Spannritzels jeweils definierte Schmierpunkte.

Üblicherweise ist die Rollenkette derart ausgeführt, dass sie einen Kettenkreislauf bildet und dabei mindestens ein Antriebskettenrad sowie ein oder mehrere Umlenkkettenräder umspannt. In einer solchen Ausgestaltung ist es von Vorteil, wenn die Schmiereinrichtung im Inneren des Kettenkreislaufs positioniert ist. Auf diese Weise ist sichergestellt, dass die im Betrieb der Antriebsvorrichtung durch die Rotation des Spannritzels und des damit gekoppelten Kettenschmierritzels auftretenden Fliehkräfte einer zielgerichteten Ausbringung des Schmiermittels nicht entgegenwirken.

Gemäß einer vorteilhaften Ausgestaltung umfasst die Schmiereinrichtung eine Schmiermittel-Fördereinrichtung, die konfiguriert ist, Steuerbefehle von einer Steuerungskomponente der Mess- und Steuereinrichtung zu empfangen und entsprechend der empfangenen Steuerbefehle Schmiermittel abzugeben. Insbesondere können die Schmierintervalle und die Schmiermengen, die bspw. von einer dezentralen Steuerungskomponente der Mess- und Steuereinrichtung auf Basis eines aus Messergebnissen in Bezug auf die Kettenlänge bzw. Kettenlängung der Rollenkette abgeleiteten Schmierzustandes der Rollenkette ermittelt werden, automatisch an die Schmiermittel-Fördereinrichtung übermittelt werden. Umgekehrt kann die Schmiermittel-Fördereinrichtung auch den vorhandenen Vorrat an Schmiermittel regelmäßig an die dezentrale Steuerungskomponente übermitteln. Sofern als Schmiermittel Öl Verwendung findet, könnte die Schmiermittel-Fördereinrichtung beispielsweise als Ölpumpe ausgeführt sein.

Gemäß einer weiter vorteilhaften Ausgestaltung kann die Antriebsvorrichtung eine visuelle Anzeigeeinrichtung zur Anzeige mindestens eines Betriebszustandes der Rollenkette umfassen. Die Anzeigeeinrichtung kann beispielsweise als ein LED Panel ausgeführt sein, welches an einem Gehäuse der Antriebvorrichtung sichtbar angebracht ist und mithilfe unterschiedlicher Farben und/oder Blinkzustände verschiedene Betriebszustände der Rollenkette anzeigt.

Gemäß einer vorteilhaften Ausgestaltung ist die Rollenkette als eine Duplexrollenkette ausgebildet, wodurch sich eine besonders effektive Übertragung der Antriebskraft auf das jeweilige Antriebsmittel des Verteilförderers, an dem die Förderwagen befestigt sind, bspw. eine Gummiblockkette, erreichen lässt. Im Fall einer Duplexrollenkette kann die Kettenspanneinrichtung dahingehend angepasst sein, dass entsprechend zwei Spannritzel vorgesehen sind, die jeweils in die Kettenlaschen beidseits der Zwischenbolzen eingreifen.

Es gibt nun verschiedene Möglichkeiten, die Lehre der vorliegenden Erfindung in vorteilhafter Weise auszugestalten und weiterzubilden. Dazu ist einerseits auf die abhängigen Patentansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung den allgemeinen Aufbau eines Quergurtsorters gemäß dem Stand der Technik,
- Fig. 2: in einer schematischen Darstellung eine Antriebsvorrichtung für einen Förderwagen eines Quergurtsorters gemäß einem Ausführungsbeispiel der Erfindung,
- Fig. 3: in einer schematischen Perspektivdarstellung die Antriebsvorrichtung gemäß Fig. 2,
- Fig. 4: in einer schematischen Perspektivdarstellung einen vergrößerten Ausschnitt der Antriebsvorrichtung gemäß den Fig. 2 und 3,
- Fig. 5: in einer schematischen Perspektivdarstellung eine Kettenspannvorrichtung der Antriebsvorrichtung gemäß den Fig. 2 bis 4,
- Fig. 6: in einer schematischen Draufsicht ein Spannritzel der Kettenspannvorrichtung gemäß Fig. 5, und
- Fig. 7: in einer schematischen Darstellung die Funktionsweise einer Mess- und Steuereinrichtung einer Antriebsvorrichtung gemäß einem Ausführungsbeispiel der Erfindung.

In den Figuren bezeichnen gleiche Bezugszeichen, soweit nicht anders angegeben, gleiche Komponenten bzw. Bauteile.

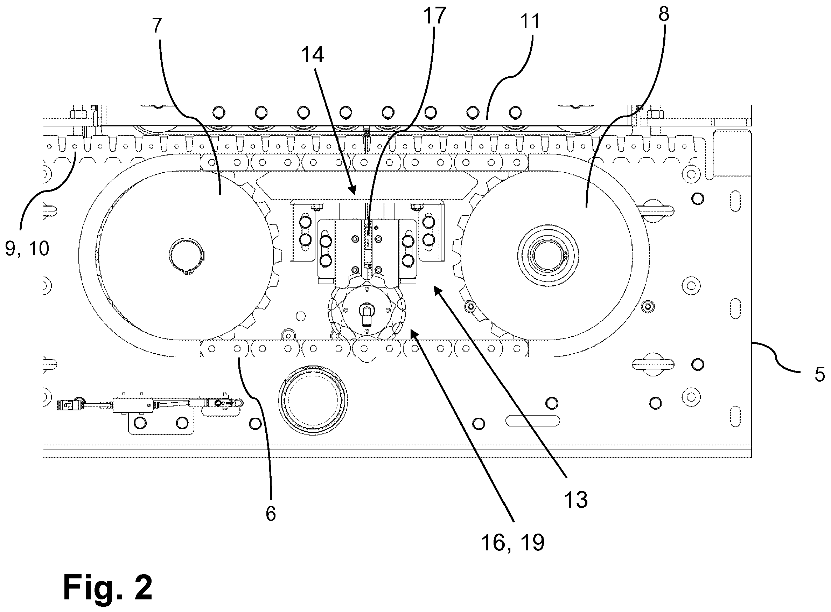

Die Fig. 2-5 zeigen schematisch in unterschiedlichen Darstellungen eine Antriebsvorrichtung für einen Förderwagen eines Quergurtsorters gemäß einem Ausführungsbeispiel der Erfindung. Die Antriebsvorrichtung ist auf einer Montage-Grundplatte 5 montiert und umfasst eine Rollenkette 6, die ein Antriebskettenrad 7 und ein Umlenk-Kettenrad 8 umspannt. Das Antriebskettenrad 7 wird von einer nicht dargestellten, vorzugsweise an der Rückseite der Montage-Grundplatte 5 angeordneten Antriebsquelle angetrieben. Mittels der Rollenkette 6 wird die Antriebskraft der Antriebsquelle auf ein Antriebsmittel 9 in Gestalt einer Gummiblocckette 10 übertragen. Hierzu ist auf der der Rollenkette 6 abgewandten Seite der Gummiblockkette 10 eine Gegendruck-Einheit 11 angeordnet, welche die Gummiblockkette 10 gegen die Rollenkette 6 drückt. An der Gummiblockkette 10 sind über ein Anbindungselement die Förderwagen des Quergurtsorters (nicht dargestellt) zum Zwecke des Antriebs mittels der Antriebsvorrichtung befestigbar.

Erfindungsgemäß umfasst die Antriebsvorrichtung eine Mess- und Steuereinrichtung zur Überwachung und ggf. Beeinflussung mindestens eines Betriebszustandes der Rollenkette 6. Eine Komponente der Mess- und Steuereinrichtung bildet eine Kettenspanneinrichtung 13 zum Spannen der Rollenkette 6. Gemäß Ausführungsbeispielen der Erfindung ist die Kettenspanneinrichtung 13 gleichzeitig zum Messen einer Kettenlängung der Rollenkette 6 und/oder zu einer hinsichtlich Dosierung und Intervall optimierten Schmierung der Rollenkette 6 ausgebildet.

Im Stand der Technik üblich wird eine während des Betriebs aufgetretene Rollenketten-Längung durch eine im Rahmen einer Wartung vorgenommene Neujustierung des Umlenk-Kettenrades 8 ausgeglichen. Im Gegensatz hierzu wird gemäß einem Ausführungsbeispiel der Erfindung die Rollenkette 6 mittels der eigenständigen Kettenspanneinrichtung 13 mit einer konstanten Kraft gespannt. Durch die konstante Spannkraft wird eine etwaige auftretende Rollenketten-Längung kontinuierlich kompensiert.

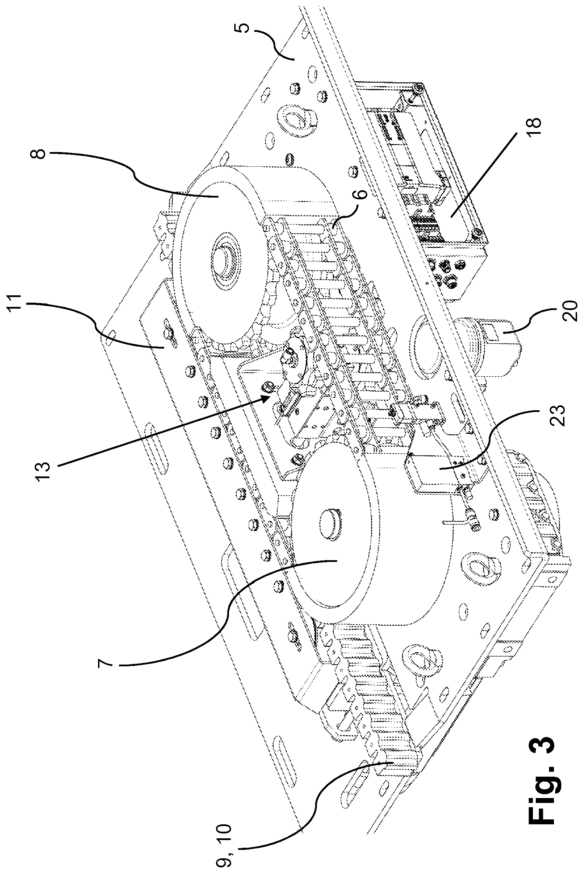

Wie in den Fig. 2-5 zu erkennen, umfasst die Kettenspanneinrichtung 13 einen Pneumatikzylinder 14 mit einem in einem Führungszylinder 15 geführten Kolben, welcher mit einem definierten konstanten Luftdruck beaufschlagt wird. Der konstante Luftdruck kann bspw. über ein Proportionaldruckregelventil sowie ein Präzisionsdruckregelventil erzeugt werden. Die zum Betrieb des Pneumatikzylinders 14 benötigten Druckregel- und Schaltventile sind mit dem Bezugszeichen 23 schematisch in Fig. 3 dargestellt.

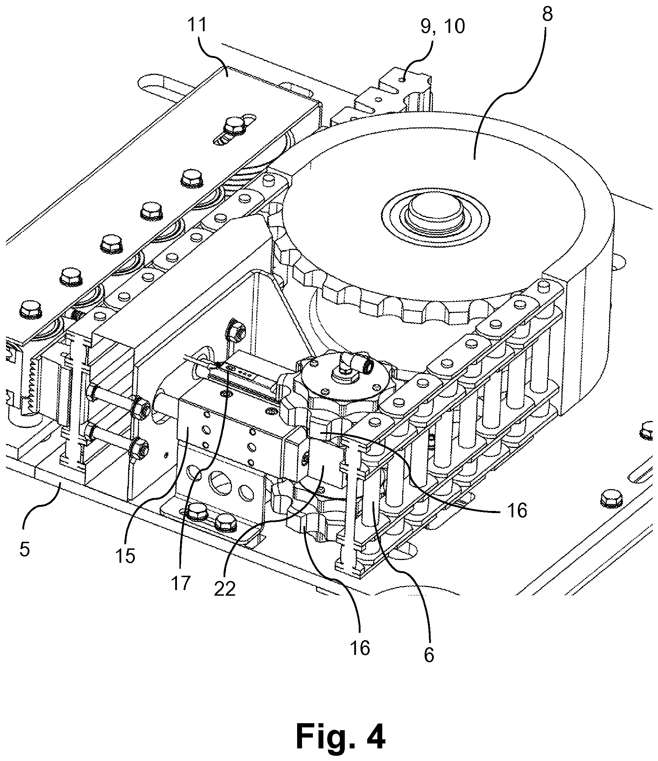

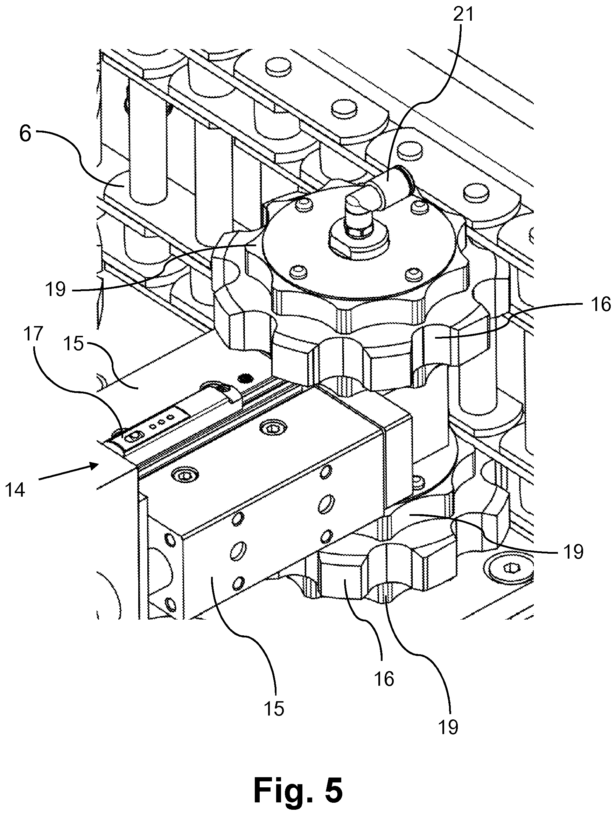

Mit der Kolbenstange des Pneumatikzylinders 14 fest verbunden sind zwei Spannritzel 16. Im Konkreten sind die Spannritzel 16 auf gegenüberliegenden Seiten eines Montageblocks 22 befestigt, welcher auf der Kolbenstange aufsitzend montiert ist, wie in insbesondere in Fig. 4 zu erkennen ist. Die Spannritzel 16 werden über die Kolbenstange des Pneumatikzylinders 14 mit einer konstanten Kraft gegen den Leertrum der Rollenkette 6 gedrückt und verursachen somit eine von der Kettenlängung unabhängige konstante Spannung der Rollenkette 6. Die Spannritzel 16 sind dabei in einem auf die Geometrie der Rollenkette 6 angepassten Abstand zueinander derart an der Kolbenstange des Pneumatikzylinders 14 befestigt, dass sie jeweils in die Kettenlaschen beidseits der Zwischenbolzen eingreifen, wie insbesondere in Fig. 5 gut zu erkennen.

Wie insbesondere in den Fig. 4 und 5 zu erkennen ist, ist der Pneumatikzylinder 14 mit einem Positionstransmitter 17 ausgestattet. Der Positionstransmitter 17 misst die Kolbenposition mit hoher Genauigkeit, je nach Ausführung vorzugsweise mit einer Genauigkeit bis zu ± 0,02 mm, und kommuniziert die gemessene Kolbenposition elektronisch an eine dezentrale Steuerungskomponente 18. Bei der Steuerungskomponente 18 kann es sich bspw. um eine SPS Steuerung handeln.

Auf Basis der gemessenen Werte der Kolbenposition kann mit einfachen mathematischen Berechnungen eine Kettenlängung der Rollenkette 6 über der Zeit berechnet werden. Wie dem Fachmann bekannt ist, können über eine so ermittelte Charakteristik der Kettenlängung über die Zeit Aussagen zum Verschleiß der Rollenkette 6 und/oder der zugehörigen Kettenräder (d.h. des Antriebskettenrades 7 und des Umlenk-Kettenrades 8) sowie auch zum Schmierzustand, insbesondere im Hinblick auf eine etwaige Mangelschmierung, getroffen werden. Derartige Charakteristiken sind teilweise durch diverse Kettenlieferanten untersucht und veröffentlicht worden. Gleichzeitig ermöglichen es Ausführungsformen der erfindungsgemäßen Antriebsvorrichtung aber auch, auf Basis gesammelter Messdaten entsprechende Untersuchungen durchzuführen, um für die Zukunft qualitativ und/oder quantitativ bessere Aussagen zum Kettenverschleiß und/oder zum Schmierzustand der Rollenkette 6 treffen zu können. Gemäß einer weiteren Ausführung können die gesammelten Messdaten mit weiteren über derselben Zeitachse gesammelten Daten aus anderen Komponenten des Verteilförderers/Sorters, wie zum Beispiel aus dem Elektro-Motor, vergleichend untersucht werden und daraus weitere nützliche Erkenntnisse, insbesondere in Bezug auf Predictive Maintenance, gewonnen werden.

Da wie oben beschrieben die Längung der Rollenkette 6 automatisch durch die Kettenspanneinrichtung 13 kompensiert wird, ist in vorteilhafter Weise ein Wartungseingriff bis zu einer definierten vorgebbaren Längungsgrenze nicht erforderlich. Wird die Längungsgrenze fast erreicht, kann vorgesehen sein, dass die Steuerungskomponente 18 diesen Zustand dem Betreiber informativ oder visuell meldet bzw. anzeigt. Dementsprechend kann der Betreiber eine gezielte Prüfung der Rollenkette 6 vornehmen, welche durch den abgeleiteten Ist-Zustand auch tatsächlich veranlasst ist. Bei Bedarf kann die Rollenkette 6 seitens des Betreibers ausgetauscht werden. Steuerungstechnisch kann der Zustand des "fast Erreichens" der Längungsgrenze der Rollenkette 6 über einen definierten Messwert des Positionstransmitters 17 bezüglich der Kolbenposition des Pneumatikzylinders 14 vorgegeben werden.

Gemäß einer bevorzugten Ausführungsform wird die definierte Schmierung der Rollenkette 6 wie folgt realisiert: Wie insbesondere in Fig. 5 zu erkennen ist, sind an den Spannritzeln 16 beidseitig Kettenschmierritzel 19 mit integrierten Öl-Kanälen angebracht. Die Kettenschmierritzel 19 können als Elemente aus (offenzelligem) PU-Schaum ausgebildet sein, die aufgrund ihrer speziellen Geometrie und Lage gegenüber dem jeweiligen Spannritzel 16 das Schmieröl nur in definierte Bereiche der Rollenkette 6 andrücken.

Gemäß der dargestellten Ausführungsform gelangt der Schmierstoff über den mit einer Ölpumpe 20 verbindbaren Öl-Anschluss 21 durch die Hohlachse der Kettenschmierritzel 19 und entsprechende Bohrungen in das Schaumstoffmaterial. Das verwendete PU-Schaummaterial speichert den Schmierstoff und gibt diesen in feinen Dosiermengen wieder ab.

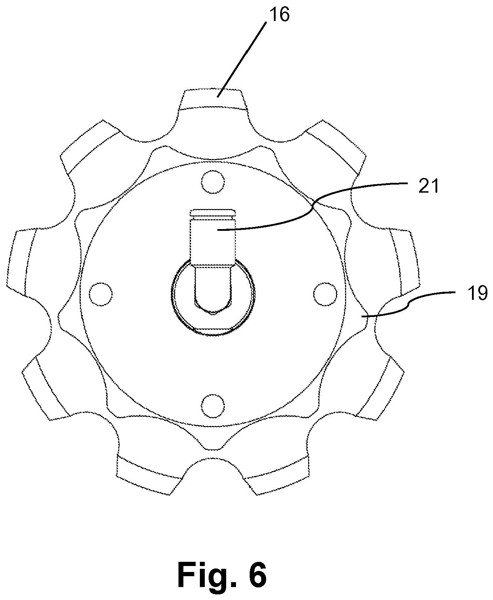

Fig. 6 zeigt in einer schematischen Draufsicht ein Spannritzel 16 der Kettenspannvorrichtung 13 gemäß den Fig. 2-5 mit einem entsprechenden Kettenschmierritzel 19. Über die genau in den Tälern der Spannritzel 16 positionierten Zähne der Kettenschmierritzel 19 findet dabei lediglich im Bereich der Kettengelenke der Rollenkette 6 eine Berührung zwischen Kettenlasche und PU-Schaum statt. Durch die Berührung und eine damit einhergehende leichte Kontraktion des PU-Schaums wird das über die Hohlachse zugeführte Schmieröl nur genau dort zwischen die Kettenlaschen gelangen, wo es tatsächlich benötigt wird. Es findet eine punktuelle Schmierung auf der Oberfläche der Kettenlaschen statt. Ausgehend von den Stellen, an denen das Schmieröl über die Zähne der Kettenschmierritzel 19 auf die Rollenkette 6 aufgebracht wird, wird das Öl anschließend über die Kapillarwirkung in die Räume zwischen den Kettenbolzen und Hülsen sowie zwischen den Kettenhülsen und der Rolle der Rollenkette 16 hineingezogen. Damit die Fliehkräfte nicht entgegenwirken, erfolgt die Schmierung bevorzugt aus dem Inneren des Kettenkreislaufes der Rollenkette 6 heraus.

Die vorstehende Beschreibung gemäß den Fig. 2-5 bezieht sich auf eine Rollenkette 6, die als Duplex-Rollenkette ausgeführt ist. Es versteht sich, dass im Falle einer Simplex-Rollenkette die Kettenspanneinrichtung 13 lediglich ein einzelnes Spannritzel 16 aufweisen muss. Für die Schmierung könnten ebenfalls, wie oben beschrieben, beidseitig auf dem Spannritzel 16 befestigte Kettenschmierritzel 19 zum Einsatz kommen.

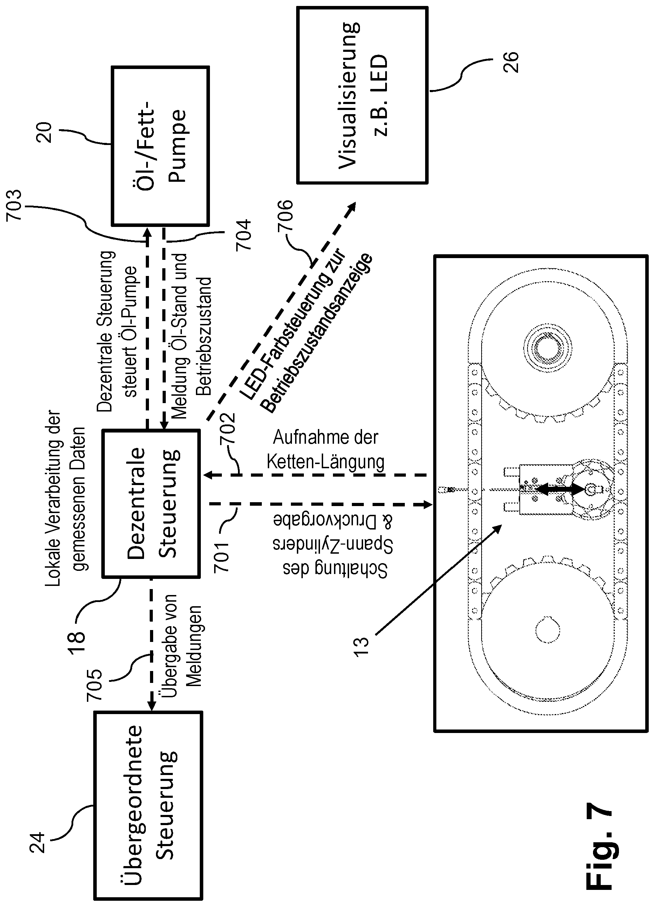

Wie in der Steuerungsübersicht in Fig. 7 gezeigt, kommuniziert in dem Fall, dass eine Mangelschmierung ausgewertet wird, die (vorzugsweise als SPS Steuerung ausgeführte) Steuerungskomponente 18 mit der Ölpumpe 20 und passt selbstständig die Schmier-Intervalle und Schmier-Dosierungen entsprechend an. Die Ölpumpe 20 wiederum meldet ihrerseits der dezentralen SPS Steuerung 18 selbstständig den Füllstand, so dass auch diese Information mit ausgewertet und entsprechend an eine übergeordnete Steuerung gemeldet werden kann. In diesem Zusammenhang können zudem Regeln für den Betrieb der Antriebsvorrichtung aufgestellt werden, bspw., dass die Anlage ohne einen Schmier-Öl-Vorrat oberhalb eines vorgegeben Schwellwertes nicht mehr anlaufen kann.

Im Falle eines Reißens der Rollenkette fährt der Pneumatikzylinder 14 aufgrund des ausbleibenden Gegendrucks bzw. der ausbleibenden Gegenspannung von der Rollenkette 6 in seine Endstellung. Diese Position des Kolbens am Anschlag wird durch den Positionstransmitter 17 an die dezentrale Steuerungskomponente 18 in kürzester Zeit übergeben. In Reaktion auf den Empfang einer entsprechenden Information kann vorgesehen sein, dass die Steuerungskomponente 18 die Antriebsvorrichtung selbstständig herunterfährt und dem Betreiber eine entsprechende Meldung an eine übergeordnete Steuerung weitergibt. Dies ist ein Vorteil der erfindungsgemäßen Antriebsvorrichtung gegenüber den im Stand der Technik existierenden Lösungen, die bislang keine schnelle Möglichkeit bieten, einen Kettenriss eindeutig zur Laufzeit der Anlage zu erkennen, um direkt mit einem automatisch ausgelösten Not-Halt der Anlage reagieren zu können.

Wie oben beschrieben, wird die Rollenkette 6 mittels der Kettenspanneinrichtung 13 mit einer definierten konstanten Kraft gespannt, wodurch die auftretende Kettenlängung kontinuierlich kompensiert wird. Wie in Fig. 7 bei 701 gezeigt, werden die entsprechenden Schaltsignale zur Steuerung des Spannzylinders (beispielsweise des in den Fig. 2-5 gezeigten Pneumatikzylinders 14) mittels geeigneter Druckvorgaben von der Steuerungskomponente 18 an die entsprechenden Druckregel- und Schaltventile 23 der Kettenspanneinrichtung 13 übermittelt.

Gleichzeitig wird, wie oben beschrieben, die Längung der Rollenkette 6 über eine Positionsbestimmung des Zylinderkolbens des Spannzylinders gemessen. Wie bei 702 gezeigt, werden die so ermittelten Daten an die Steuerungskomponente 18 zur weiteren Verarbeitung kommuniziert.

Die Daten der Kettenlängung werden von der Steuerungskomponente 18 über eine längere Zeit relativ zu der Laufzeit der Anlage analysiert und es werden mithilfe bestimmter Algorithmen Rückschlüsse zum Ketten- und Kettenradverschleiß sowie zur aktuellen Schmierung sowie einem Riss der Rollenkette 6 gebildet. Zudem können die Daten der Kettenlängung mit Daten aus anderen Komponenten des Sorters verglichen werden.

Wie oben beschrieben, werden über ein Schmiersystem spezielle PU-Schaum-Elemente an den Spannritzeln 16 über eine Ölpumpe 20 mit Schmieröl versorgt, welche die Rollenkette 6 an definierten Stellen schmieren. Die Schmierintervalle und die Schmiermengen werden dabei automatisch von der Steuerungskomponente 18 auf Basis der ermittelten Rückschlüsse zum Schmierzustand der Rollenkette 6 bestimmt und an die Öl-Pumpe kommuniziert (703). Die Ölpumpe 20 ist ihrerseits konfiguriert, den vorhandenen Vorrat an Schmiermittel regelmäßig an die dezentrale Steuerungskomponente 18 zu übermitteln (704).

Alle verarbeiteten Informationen aus der dezentralen Steuerungskomponente 18 können an eine übergeordnete Steuerung 24 und somit an den Betreiber der Anlage weitergegeben werden, wie bei 705 in Fig. 7 gezeigt.

Wie bei 706 gezeigt, können zudem über ein LED-Panel 26, welches an der Montage-Grundplatte 5 bzw. einem Gehäuse der Antriebseinheit angebracht ist, definierte Betriebszustände mithilfe unterschiedlicher Farben und Blink-Zustände angezeigt werden.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Sortierstrecke
- 2: Abwurfstation (Endstelle)
- 3: Förderwagen
- 4: Gurtförderer
- 5: Montage-Grundplatte
- 6: Rollenkette
- 7: Antriebskettenrad
- 8: Umlenk-Kettenrad
- 9: Antriebsmittel
- 10: Gummiblockkette
- 11: Gegendruck-Einheit
- 13: Kettenspanneinrichtung
- 14: Pneumatikzylinder
- 15: Führungszylinder
- 16: Spannritzel
- 17: Positionstransmitter
- 18: Steuerungskomponente
- 19: Kettenschmierritzel
- 20: Ölpumpe
- 21: Öl-Anschluss
- 22: Montageblock
- 23: Druckregel- und Schaltventile
- 24: übergeordnete Steuerung
- 26: LED-Panel

## Patentansprüche

1. Antriebsvorrichtung eines Verteilförderers, vorzugsweise eines Quergurtsorters, für einen Förderwagen des Verteilförderers, umfassend
eine Antriebsquelle,
eine Rollenkette (6) zur Übertragung einer Antriebskraft der Antriebsquelle auf ein Antriebsmittel (9), an dem der Förderwagen befestigbar ist, sowie
eine Mess- und Steuereinrichtung zur Überwachung und ggf. Beeinflussung mindestens eines Betriebszustandes der Rollenkette (6),
**dadurch gekennzeichnet, dass** die Mess- und Steuereinrichtung einen als Pneumatikzylinder (14) ausgeführten Arbeitszylinder umfasst, dessen Kolbenstange eingerichtet ist, gegen die Rollenkette (6) zu drücken, wobei der Kolben des Arbeitszylinders zur Erzeugung einer konstanten Spannung der Rollenkette (6) mit einer konstanten Arbeitskraft beaufschlagbar ist.

2. Antriebsvorrichtung nach Anspruch 1, wobei der mindestens eine überwachte Betriebszustand der Rollenkette (6) die Kettenlänge bzw. Kettenlängung der Rollenkette (6) umfasst.

3. Antriebsvorrichtung nach Anspruch 1 oder 2, wobei der mindestens eine überwachte Betriebszustand der Rollenkette (6) den Schmierzustand der Rollenkette (6) umfasst.

4. Antriebsvorrichtung nach einem der Ansprüche 1 bis 3, wobei die Mess- und Steuereinrichtung eine Steuerungskomponente (18) aufweist, die konfiguriert ist, Messergebnisse in Bezug auf die Kettenlänge bzw. Kettenlängung der Rollenkette (6) zu empfangen, und aus den Messergebnissen unter Anwendung vorgebbarer Algorithmen
- einen Verschleißzustand und/oder einen Schmierzustand der Rollenkette (6),
- einen Verschleißzustand der zugehörigen Kettenräder (7, 8) der Rollenkette (6),
- eine Verformung der Achse der der zugehörigen Kettenräder (7, 8) der Rollenkette (6), und/oder
- einen Bruch bzw. ein Reißen der Rollenkette (6),
abzuleiten.

5. Antriebsvorrichtung nach Anspruch 4, wobei die Steuerungskomponente (18) konfiguriert ist, in Abhängigkeit des abgeleiteten Schmierzustandes der Rollenkette (6) eine angepasste Schmierdosierung und/oder ein angepasstes Schmierintervall zu ermitteln.

6. Antriebsvorrichtung nach Anspruch 5, wobei dem Arbeitszylinder ein Positionstransmitter (17) zugeordnet ist, der konfiguriert ist, die Position des Zylinderkolbens zu bestimmen und diese an eine Steuerungskomponente (18) der Mess- und Steuereinrichtung zu übermitteln.

7. Antriebsvorrichtung nach Anspruch 6, wobei die Steuerungskomponente (18) konfiguriert ist, beim Empfangen eines Signals von dem Positionstransmitter (17), welches eine Positionierung des Zylinderkolbens des Arbeitszylinders in einer ausgefahrenen Endstellung anzeigt, die Antriebsvorrichtung auszuschalten.

8. Antriebsvorrichtung nach einem der Ansprüche 5 bis 7, wobei an der Kolbenstange des Arbeitszylinders ein Spannritzel (16) angeordnet ist, das mit der Rollenkette (6) zusammenwirkt.

9. Antriebsvorrichtung nach einem der Ansprüche 1 bis 8, weiterhin umfassend eine Schmiereinrichtung zur gesteuerten Abgabe von Schmiermittel an die Rollenkette (6).

10. Antriebsvorrichtung nach Anspruch 9, wobei die Schmiereinrichtung ein auf dem Spannritzel (16) montiertes Kettenschmierritzel (19) mit integrierten Schmiermittel-Kanälen umfasst, wobei an den Zähnen des Kettenschmierritzels (19) Elemente aus einem zur Speicherung und Abgabe von Schmiermitteln geeignetem Material, insbesondere Schaumstoff, vorgesehen sind.

11. Antriebsvorrichtung nach Anspruch 10, wobei das Spannritzel (16) und das Kettenschmierritzel (19) derart zueinander positioniert sind, dass die Zähne des Kettenschmierritzels (19) jeweils zwischen zwei Zähne des Spannritzels (16) positioniert sind.

12. Antriebsvorrichtung nach einem der Ansprüche 9 bis 11, wobei die Rollenkette (6) einen Kettenkreislauf bildet und mindestens ein Antriebskettenrad (7) sowie ein oder mehrere Umlenkkettenräder (8) umspannt, wobei die Schmiereinrichtung im Inneren des Kettenkreislaufs positioniert ist.

13. Antriebsvorrichtung nach einem der Ansprüche 9 bis 12, wobei die Schmiereinrichtung eine vorzugsweise als Ölpumpe (20) ausgeführte Schmiermittel-Fördereinrichtung umfasst, die konfiguriert ist, Steuerbefehle von einer Steuerungskomponente (18) der Mess- und Steuereinrichtung zu empfangen und entsprechend der empfangenen Steuerbefehle Schmiermittel abzugeben.

14. Antriebsvorrichtung nach einem der Ansprüche 1 bis 13, weiterhin umfassend eine visuelle Anzeigeeinrichtung zur Anzeige mindestens eines Betriebszustandes der Rollenkette (6), und /oder
wobei die Rollenkette (6) als eine Duplexrollenkette ausgebildet ist.

15. Vorrichtung zur Förderung und Sortierung von Stückgütern, vorzugsweise Quergurtsorter, umfassend
mindestens einen angetriebenen Förderwagen, und
eine Antriebsvorrichtung nach Anspruch 1 für den Förderwagen, wobei der Förderwagen an dem Antriebsmittel befestigbar ist.

## Claims

1. Drive apparatus of a distributing conveyor, preferably a cross-belt sorter for a conveyor carriage of the distributing conveyor, comprising
a drive source,
a roller chain (6) for transmitting a drive force of the drive source to a drive means (9) to which the conveyor carriage can be secured, and
a measurement and control device for monitoring and where applicable influencing at least one operating state of the roller chain (6),
**characterised in that** the measurement and control device comprises a working cylinder which is in the form of a pneumatic cylinder (14) and whose piston rod is configured to press against the roller chain (6), wherein the piston of the working cylinder can be acted on with a constant working force in order to produce a constant tension of the roller chain (6).

2. Drive apparatus according to claim 1, wherein the at least one monitored operating state of the roller chain (6) comprises the chain length or chain elongation of the roller chain (6).

3. Drive apparatus according to claim 1 or claim 2, wherein the at least one monitored operating state of the roller chain (6) comprises the lubrication state of the roller chain (6).

4. Drive apparatus according to any one of claims 1 to 3, wherein the measurement and control device has a control component (18) which is configured to receive measurement results with respect to the chain length or chain elongation of the roller chain (6), and from the measurement results using predeterminable algorithms
- to derive a wear state and/or a lubrication state of the roller chain (6),
- a wear state of the associated chain wheels (7, 8) of the roller chain (6),
- a deformation of the axle of the associated chain wheels (7, 8) of the roller chain (6), and/or
- a breakage or tearing of the roller chain (6).

5. Drive apparatus according to claim 4, wherein the control component (18) is configured, depending on the derived lubrication state of the roller chain (6), to establish an adapted lubrication metering and/or an adapted lubrication interval.

6. Drive apparatus according to claim 5, wherein there is associated with the working cylinder a position transmitter (17) which is configured to determine the position of the cylinder piston and to transmit it to a control component (18) of the measurement and control device.

7. Drive apparatus according to claim 6, wherein the control component (18) is configured, when receiving a signal from the position transmitter (17) which indicates a positioning of the cylinder piston of the working cylinder in an extended end position, to switch off the drive apparatus.

8. Drive apparatus according to any one of claims 5 to 7, wherein there is arranged on the piston rod of the working cylinder a clamping pinion (16) which cooperates with the roller chain (6).

9. Drive apparatus according to any one of claims 1 to 8, further comprising a lubrication device for controlled discharge of lubricant to the roller chain (6).

10. Drive apparatus according to claim 9, wherein the lubrication device comprises a chain lubrication pinion (19) which is mounted on the clamping pinion (16) and which has integrated lubrication channels, wherein elements comprising a material which is suitable for storing and discharging lubricants, in particular foamed material, are provided on the teeth of the chain lubrication pinion (19).

11. Drive apparatus according to claim 10, wherein the clamping pinion (16) and the chain lubrication pinion (19) are positioned with respect to each other in such a manner that the teeth of the chain lubrication pinion (19) are positioned in each case between two teeth of the clamping pinion (16).

12. Drive apparatus according to any one of claims 9 to 11, wherein the roller chain (6) forms a chain circuit and spans at least one drive chain wheel (7) and one or more redirection chain wheels (8), wherein the lubrication device is positioned inside the chain circuit.

13. Drive apparatus according to any one of claims 9 to 12, wherein the lubrication device comprises a lubrication conveying device which is preferably in the form of an oil pump (20) and which is configured to receive control commands from a control component (18) of the measurement and control device and to discharge lubricant in accordance with the received control commands.

14. Drive apparatus according to any one of claims 1 to 13, further comprising a visual display device for displaying at least one operating state of the roller chain (6), and/or wherein the roller chain (6) is in the form of a duplex roller chain.

15. Apparatus for conveying and sorting piece goods, preferably cross-belt sorter, comprising
- at least one driven conveyor carriage, and
a drive apparatus according to claim 1 for the conveyor carriage, wherein the conveyor carriage can be secured to the drive means.

## Revendications

1. Dispositif d'entraînement d'un convoyeur de répartition, de préférence d'un trieur à sangle transversale, pour un chariot de convoyage du convoyeur de répartition, comprenant
une source d'entraînement,
une chaîne à rouleaux (6) pour la transmission d'une force d'entraînement de la source d'entraînement à un moyen d'entraînement (9) auquel le chariot de convoyage peut être fixé, ainsi que
un dispositif de mesure et de commande pour la surveillance et, le cas échéant, le contrôle d'au moins un état de fonctionnement de la chaîne à rouleaux (6),
**caractérisé en ce que** le dispositif de mesure et de commande comprend un vérin de travail conçu comme un vérin pneumatique (14), dont la tige de piston est conçue pour s'appuyer contre la chaîne à rouleaux (6), dans lequel le piston du vérin de travail peut être sollicité avec une force de travail constante afin de générer une tension constante de la chaîne à rouleaux (6).

2. Dispositif d'entraînement selon la revendication 1, dans lequel l'au moins un état de fonctionnement surveillé de la chaîne à rouleaux (6) comprend la longueur de chaîne ou l'allongement de la chaîne à rouleaux (6).

3. Dispositif d'entraînement selon la revendication 1 ou 2, dans lequel l'au moins un état de fonctionnement surveillé de la chaîne à rouleaux (6) comprend l'état de lubrification de la chaîne à rouleaux (6).

4. Dispositif d'entraînement selon l'une des revendications 1 à 3, dans lequel le dispositif de mesure et de commande comprend un composant de commande (18) qui est conçu pour recevoir des résultats de mesure concernant la longueur de chaîne ou l'allongement de la chaîne à rouleaux (6) et pour déduire des résultats de mesure, en appliquant des algorithmes prédéterminés,
- un état d'usure et/ou un état de lubrification de la chaîne à rouleaux (6),
- un état d'usure des roues de chaîne (7, 8) correspondantes de la chaîne à rouleaux (6),
- une déformation de l'axe des roues de chaîne (7, 8) correspondantes de la chaîne à rouleaux (6) et/ou
- une rupture ou une déchirure de la chaîne à rouleaux (6).

5. Dispositif d'entraînement selon la revendication 4, dans lequel le composant de commande (18) est conçu pour déterminer, en fonction de l'état de lubrification déduit de la chaîne à rouleaux (6), un dosage de lubrification adapté et/ou un intervalle de lubrification adapté.

6. Dispositif d'entraînement selon la revendication 5, dans lequel, au vérin de travail, correspond un transmetteur de position (17) qui est conçu pour déterminer la position du piston du vérin et la transmettre à un composant de commande (18) du dispositif de mesure et de commande.

7. Dispositif d'entraînement selon la revendication 6, dans lequel le composant de commande (18) est conçu pour arrêter le dispositif d'entraînement lors de la réception d'un signal provenant du transmetteur de position (17), qui indique un positionnement du piston du vérin de travail dans une position finale sortie.

8. Dispositif d'entraînement selon l'une des revendications 5 à 7, dans lequel, sur la tige de piston du vérin de travail, est disposé un pignon tendeur (16) qui interagit avec la chaîne à rouleaux (6).

9. Dispositif d'entraînement selon l'une des revendications 1 à 8, comprenant en outre un dispositif de lubrification pour la distribution contrôlée d'un lubrifiant sur la chaîne à rouleaux (6).

10. Dispositif d'entraînement selon la revendication 9, dans lequel le dispositif de lubrification comprend un pignon de lubrification de chaîne (19) monté sur le pignon tendeur (16), avec des canaux de lubrification intégrés, dans lequel, sur les dents du pignon de lubrification de chaîne (19), sont prévus des éléments constitués d'un matériau permettant l'accumulation et la distribution de lubrifiants, plus particulièrement un matériau alvéolaire.

11. Dispositif d'entraînement selon la revendication 10, dans lequel le pignon tendeur (16) et le pignon de lubrification de chaîne (19) sont positionnés l'un par rapport à l'autre de sorte que les dents du pignon de lubrification de chaîne (19) sont positionnées respectivement entre deux dents du pignon tendeur (16).

12. Dispositif d'entraînement selon l'une des revendications 9 à 11, dans lequel la chaîne à rouleaux (6) forme un circuit de chaîne et entoure au moins une roue de chaîne d'entraînement (7) ainsi qu'une ou plusieurs roues de chaîne de renvoi (8), dans lequel le dispositif de lubrification est positionné à l'intérieur du circuit de chaîne.

13. Dispositif d'entraînement selon l'une des revendications 9 à 12, dans lequel le dispositif de lubrification comprend un dispositif de convoyage de lubrifiant conçu comme une pompe à huile (20), qui est conçue pour recevoir des instructions de commande de la part d'un composant de commande (18) du dispositif de mesure et de commande et de distribuer du lubrifiant en fonction des instructions de commande reçues.

14. Dispositif d'entraînement selon l'une des revendications 1 à 13, comprenant en outre un dispositif d'affichage visuel pour l'affichage d'au moins un état de fonctionnement de la chaîne à rouleaux (6) et/ou dans lequel la chaîne à rouleaux (6) est conçue comme une chaîne à rouleaux duplex.

15. Dispositif pour le convoyage et le tri de marchandises diverses, de préférence un trieur à sangle transversale, comprenant
au moins un chariot de convoyage entraîné et
un dispositif d'entraînement selon la revendication 1 pour le chariot de convoyage, dans lequel le chariot de convoyage peut être fixé au moyen d'entraînement.
